# EUROPÄISCHE PATENTSCHRIFT

(11) **EP 1 136 247 B1**
(45) Veröffentlichungstag und Bekanntmachung des Hinweises auf die Patenterteilung: **30.08.2006**
(21) Anmeldenummer: 01105636.3
(22) Anmeldetag: 07.03.2001
(51) Int. Cl.: B30B 15/06

(54) **Presspolster sowie Heizplattenpresse mit solchen Presspolstern**
Press pad and hot-plate press with such a pad
Coussinet pour presse et presse à plaques chauffantes avec un tel coussinet

(30) Priorität: 22.03.2000 DE 20005266 U
(43) Veröffentlichungstag der Anmeldung: 26.09.2001
(73) Patentinhaber: R. Bruch & Cie. S.A., 4721 Neu-Moresnet (BE)
(72) Erfinder: Halterbeck, Walter, 52353 Düren (DE); Rosenthal, Diethelm, 52397 Lohmar-Scheid (DE)
(74) Vertreter: Paul, Dieter-Alfred

(56) Entgegenhaltungen:
- DE-A- 1 773 155
- DE-A- 2 319 593
- DE-A- 3 237 912
- DE-U- 29 721 495
- GB-A- 1 265 009
- GB-A- 1 361 358
- US-A- 5 422 462

## Beschreibung

Die Erfindung betrifft ein Presspolster für den Einsatz in Heizplattenpressen, insbesondere Laminierpressen, die für die Herstellung von Platten als Pressgut bestimmt sind, wobei das Presspolster einen textilen Träger mit einer Schar von Fäden in zumindest einer Richtung aufweist. Sie bezieht sich ferner auf Heizplattenpressen für die Herstellung von Platten als Pressgut mit Heizpressplatten und dazwischen angeordneten Presspolstern, wobei die Presspolster einen textilen Träger mit einer Schar von Fäden in zumindest einer Richtung aufweisen.

Die Herstellung von plattenförmigen Schichtmaterialien, beispielsweise dekorativ beschichteten Spanplatten, erfolgt in Laminierpressen, die als Nieder- oder Hochdrucketagenpressen oder Kurztaktpressen ausgebildet sein können. Solche Pressen weisen ein oder mehrere Paare von Heizpressplatten auf, zwischen denen jeweils zwei Presspolster angeordnet sind, die die Aufgabe haben, den von den Heizpressplatten ausgehenden Druck vollflächig und gleichmäßig auf das Pressgut zu übertragen. Die Presspolster müssen hohen Drücken und auch den in solchen Pressen vorhandenen Temperaturen standhalten können, und sie müssen in der Lage sein, die von den Heizpressplatten ausgehende Wärme schnell und ohne große Verluste auf das Pressgut überzuleiten. Beispiele für solche Presspolster sind in DE 297 21 495 U1, DE-OS 23 19 593, DE 295 18 204 U1 und DE-OS 26 27 442 beschrieben.

Für die Qualität des Pressgutes ist es von großer Bedeutung, daß der Temperaturverlauf beim Pressvorgang möglichst optimal den jeweiligen Anforderungen entspricht. Die bisherige Temperatursteuerung der Heizplattenpressen wird diesen Anforderungen jedoch nicht ausreichend gerecht.

Der Erfindung liegt folglich die Aufgabe zugrunde, die Voraussetzungen dafür zu schaffen, daß die Messung des Temperaturverlaufs am Pressgut wesentlich besser erfaßt werden kann als bei den bekannten Heizplattenpressen.

Diese Aufgabe wird erfindungsgemäß dadurch gelöst, daß das Presspolster wenigstens einen Temperatursensor aufweist, der über eine Schnittstelle mit einem externen Auswertegerät verbindbar ist. Grundgedanke der Erfindung ist es somit, die Temperatur in der Heizplattenpresse möglichst nahe am Pressgut zu erfassen, indem mindestens eines der Presspolster wenigstens einen Temperatursensor aufweist. Beim Einlegen des oder der Presspolster in die ebenfalls erfindungsgemäße Heizplattenpresse wird der Temperatursensor über eine Schnittstelle, beispielsweise eine Verbindung in Form einer Kabel-Steckerkombination, mit einem Auswertegerät verbunden, welches Signale, die der jeweiligen Temperatur entsprechen, an eine weitere Einrichtung in der Heizplattenpresse weitergibt, beispielsweise eine Temperaturanzeige, eine Alarmgabeeinrichtung, vorzugsweise jedoch an eine Temperatursteuereinrichtung für die Temperatursteuerung der Heizpressplatten oder eine Temperaturregeleinrichtung für die Temperaturregelung der Heizpressplatten weitergibt. Es versteht sich, daß durch die pressgutnahe Temperaturerfassung eine dem optimalen Temperaturverlauf besonders nahekommende Temperatursteuerung bzw. Temperaturregelung möglich ist, wodurch eine hohe Qualität des Pressgutes mit großer Reproduzierbarkeit erzielt wird.

Dabei wird schon dann ein wesentlicher Fortschritt erzielt, wenn nur eines der Presspolster mit einem Temperatursensor ausgestattet wird. Von Vorteil kann es jedoch sein, wenn zwischen jedem Paar von Heizpressplatten wenigstens ein Presspolster mit wenigstens einem Temperatursensor angeordnet ist, um über eine Mittelwertbildung die Temperatursteuerung oder -regelung zu beeinflussen. Eine noch genauere Temperatursteuerung oder -regelung kann dann erreicht werden, wenn jedem Paar von Heizpressplatten jeweils ein eigenes Auswertegerät mit Verbindung zu jeweils einer eigenen Temperaturanzeige, einer eigenen Alarmgabeeinrichtung und/oder einer eigenen Temperatursteuereinrichtung und/oder einer eigenen Temperaturregeleinrichtung zugeordnet ist, so daß die Paare von Heizpressplatten unabhängig gesteuert bzw. geregelt werden können. Dabei besteht auch die Möglichkeit, beide Presspolster eines Paars von Heizpressplatten mit Temperatursensoren auszustatten und sie zur Temperatursteuerung oder -regelung heranzuziehen.

was das Presspolster selbst angeht, reicht schon die Anordnung eines Temperatursensors aus, um die Temperatursteuerung oder -regelung dem optimalen Verlauf wesentlich besser anzupassen. Er sollte dann möglichst in der Flächenmitte des Presspolsters angeordnet sein. Wenn mehrere Temperatursensoren über die Fläche des Presspolsters verteilt sind, besteht die Möglichkeit, die Temperaturverteilung besser zu erfassen und für die Temperatursteuerung bzw. -regelung beispielsweise durch Mittelwertbildung heranzuziehen. Dabei sollten die Temperatursensoren möglichst in einer Ebene des Presspolsters angeordnet sein, damit sie nach der Anordnung in der Heizplattenpresse einen gleichmäßigen Abstand zum Pressgut haben.

Vorzugsweise sollte(n) der bzw. die Temperatursensor(en) nahe oder an einer Flachseite des Presspolsters angeordnet sein, wobei das Presspolster in der Heizplattenpresse so angeordnet werden soll, daß diese Flachseite dem Pressenraum bzw. dem Pressgut zugewandt ist. Auch diesem Merkmal liegt die Überlegung zugrunde, die Temperatur möglichst pressgutnah zu erfassen.

Als Temperatursensoren eignen sich alle diejenigen, die in dem Temperaturbereich, in dem Heizplattenpressen arbeiten, beständig und in der Lage sind, die jeweils herrschende Temperatur zu erfassen. Hierfür kommen in erster Linie Thermoelemente, aber auch Widerstandssensoren sowie Kalt- oder Heißleiter in Frage (vgl. Schanz, Sensoren - Fühler der Meßtechnik, Hüthig-Verlag, 1986, Seiten 76 bis 98).

Es ist zweckmäßig, wenn zumindest einer der Fäden durch Zuleitungen zu wenigstens einem Temperatursensor ersetzt ist. Hierdurch bleibt die gleichmäßige Struktur des Trägers des Presspolsters weitestgehend erhalten. Der textile Träger kann beispielweise in Form eines Gewebes, Gewirkes, Fadengeleges etc. ausgebildet sein.

Der Temperatursensor bzw. wenigstens einer der Temperatursensoren kann aus parallelen Einzeldrähten bestehen, die an der Meßstelle blank und dort verdrillt sind, so daß sie sich berühren. Die Einzeldrähte können dann nach außen geführt und dort mit einem Stecker versehen werden, der die Schnittstelle bildet.

In der Zeichnung ist die Erfindung anhand eines Ausführungsbeispiels näher veranschaulicht. Es zeigen:
- Fig. 1: einen Querschnitt durch die Mitte eines Presspolsters und
- Fig. 2: ein Thermoelement für das Presspolster gemäß Fig. 1.

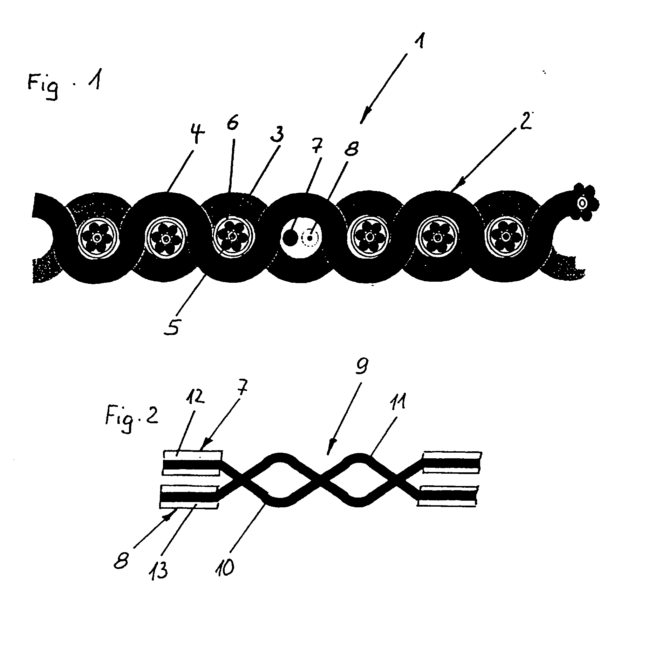

Das in Figur 1 dargestellte Presspolster 1 ist als einlagiges Gewebe 2 mit sich in Schußrichtung erstreckenden Querfäden - beispielhaft mit 3 bezeichnet - und sich in Kettrichtung erstreckenden Längsfäden - beispielhaft mit 4 bezeichnet - ausgebildet. Dabei verlaufen die Querfäden 3 im wesentlichen gestreckt, d.h. die Längsfäden 4 legen sich um die Querfäden 3 herum und bilden dabei an Ober- und Unterseite ausgeprägte Kröpfungen.

Die Querfäden 3 haben einen Seelenfaden - beispielhaft mit 5 bezeichnet -, der von einer Kupferlitze gebildet wird. Der Seelenfaden 5 ist von einer aufextrudierten Elastomerhülle 6 aus einem Siliconelastomer umgeben. Die Längsfäden 4 bestehen aus einer Kupferlitze mit um einen Zentraldraht verseilten Einzeldrähten.

In der Mitte ist ein Querfaden 3 weggelassen und durch zwei elektrisch leitfähige Kabel 7, 8 ersetzt. Die Kabel 7, 8 bilden Zuleitungen zu einem in Figur 2 dargestellten Thermoelement 9. Das Thermoelement 9 wird hier von verdrillten Kerndrähten 10, 11 der Kabel 7, 8 gebildet, die von den Kabelisolierungen 12, 13 der Kabel 7, 8 befreit sind und aufgrund ihrer Verdrillung aneinander liegen.

Die Kabel 7, 8 werden bei der Herstellung des Gewebes 2 anstelle eines Querfadens 3 in das geöffnete Webfach so eingelegt, daß das Thermoelement 9 in der Flächenmitte des Preßpolsters 1 zu liegen kommt. An einer Seite stehen die Kabel 7, 8 nach außen mit einer Überlänge von ca. 1,5 m vor. Das herausstehende Ende wird beim nächsten Schuß mit einem Faden des Oberfachs an das Gewebe 2 angewebt. Die Enden der Kabel 7, 8 werden mit einem Thermoelement-Stecker verbunden. Über diesen TE-Stecker kann die Verbindung zu einer Auswerteeinrichtung an der Heizplattenpresse hergestellt werden, die Signale für eine Temperatursteuerung oder -regelung erzeugt, welche der jeweils herrschenden Temperatur entsprechen.

## Patentansprüche

1. Presspolster (1) für den Einsatz in Heizplattenpressein die für die Herstellung von Platten als Preßgut bestimmt sind, wobei das Preßpolster (1) einen textilen Träger (2) mit einer Schar von Fäden (3, 4) in zumindest einer Richtung aufweist, **dadurch gekennzeichnet, daß** das Presspolster (1) wenigstens einen Temperatursensor (9) aufweist, der über eine Schnittstelle mit einem externen Auswertegerät verbindbar ist.

2. Presspolster nach Anspruch 1, **dadurch gekennzeichnet, daß** ein Temperatursensor (9) in der Flächenmitte des Presspolsters (1) angeordnet ist.

3. Presspolster nach Anspruch 1, **dadurch gekennzeichnet, daß** mehrere Temperatursensoren über die Fläche des Presspolsters verteilt sind.

4. Presspolster nach Anspruch 1 oder 3, **dadurch gekennzeichnet, daß** die bzw. mehrere der Temperatursensoren in einer Ebene des Presspolsters angeordnet sind.

5. Presspolster nach einem der Ansprüche 1 bis 4, **dadurch gekennzeichnet, daß** der bzw. die Temperatursensor(en) (9) nahe oder an einer Flachseite des Presspolsters (1) angeordnet ist bzw. sind.

6. Presspolster nach einem der Ansprüche 1 bis 5, **dadurch gekennzeichnet, daß** der bzw. die Temperatursensor(en) als Thermoelement (9), Widerstandssensor, Kalt- oder Heißleiter ausgebildet ist bzw. sind.

7. Presspolster nach einem der Ansprüche 1 bis 6, **dadurch gekennzeichnet, daß** zumindest einer der Fäden (3) ganz oder teilweise durch Zuleitungen zu wenigstens einem Temperatursensor (9) ersetzt ist.

8. Presspolster nach einem der Ansprüche 1 bis 7, **dadurch gekennzeichnet, daß** der Temperatursensor (9) bzw. wenigstens einer der Temperatursensoren aus Einzeldrähten (7, 8) besteht, die an der Meßstelle blank sind und dort kontaktieren, z.B. verdrillt sind.

9. Presspolster nach einem der Ansprüche 1 bis 8, **dadurch gekennzeichnet, daß** der bzw. die Temperatursensor(en) über Zuleitungen (7, 8) verfügen, die nach außen geführt sind und dort einen Stecker aufweisen.

10. Heizplattenpresse für die Herstellung von Platten als Preßgut mit Heizpressplatten und dazwischen angeordneten Presspolstern (1), wobei die Preßpolster (1) einen textilen Träger (2) mit einer Schar von Fäden (3, 4) in zumindest einer Richtung aufweisen, **dadurch gekennzeichnet, daß** wenigstens ein Presspolster (1) wenigstens einen Temperatursensor (9) aufweist, der über eine Schnittstelle mit einem Auswertegerät verbunden ist, welches Signale für eine Temperaturanzeige, eine Alarmgebeeinrichtung und/oder eine Temperatursteuereinrichtung für die Temperatursteuerung der Heizpressplatten und/oder eine Temperaturregeleinrichtung für die Temperaturregelung der Heizpressplatten erzeugt.

11. Heizplattenpresse nach Anspruch 10, **dadurch gekennzeichnet, daß** zwischen jedem Paar von Heizpressplatten wenigstens ein Presspolster (1) mit wenigstens einem Temperatursensor (9) angeordnet ist.

12. Heizplattenpresse nach Anspruch 11, **dadurch gekennzeichnet, daß** jedem Paar von Heizpressplatten mindestens ein eigenes Auswertegerät mit Verbindung zu jeweils einer eigenen Temperaturanzeige, einer eigenen Alarmgabeeinrichtung und/oder einer eigenen Temperatursteuereinrichtung für die Temperatursteuerung der Heizpressplatten und/oder einer eigenen Temperaturregeleinrichtung für die Temperaturregelung der Heizpressplatten zugeordnet ist.

## Claims

1. Press pad (1) for use in a hot plate presses, which are intended for the production of plates as pressed products, in which the press pad (1) has a textile carrier (2) with a skein of threads (3, 4) in at least one direction, **characterised in that** the press pad (1) has at least one temperature sensor (9), which is able to be connected to an external analysis device via an interface.

2. Press pad according to claim 1, **characterised in that** a temperature sensor (9) is arranged in the centre of the face of the press pad (1).

3. Press pad according to claim 1, **characterised in that** several temperature sensors are distributed over the face of the press pad.

4. Press pad according to claim 1 or 3, **characterised in that** the or several temperature sensors are arranged in one plane of the press pad.

5. Press pad according to one of claims 1 to 4, **characterised in that** the temperature sensor(s) (9) is or are arranged near or on a flat side of the press pad (1).

6. Press pad according to one of claims 1 to 5, **characterised in that** the temperature sensor(s) is or are designed as a thermocouple (9), resistance sensor, PTC or NTC thermistor.

7. Press pad according to one of claims 1 to 6, **characterised in that** at least one of the threads (3) is fully or partially replaced by input leads to at least one temperature sensor (9).

8. Press pad according to at least one of claims 1 to 7, **characterised in that** the temperature sensor (9) or at least one of the temperature sensors consists of single strands (7, 8), which are bare at the measuring point and make contact there, e.g. they are twisted.

9. Press pad according to one of claims 1 to 8, **characterised in that** the temperature sensors(s) have available input leads (7, 8), which are led outside and have a plug there.

10. Hot plate press for the production of plates as a pressed product with hot press plates and press pads (1) arranged in between, in which the press pads (1) have a textile carrier (2) with a skein of threads (3, 4) in at least one direction, **characterised in that** at least one press pad (1) has at least one temperature sensor (9), which is connected with an evaluation device via an interface, which produces signals for a temperature indicator, an alarm device and/or a temperature control device for controlling the temperature of the hot press plates and/or a temperature regulation device for regulating the temperature of the hot press plates.

11. Hot plate press according to claim 10, **characterised in that** at least one press pad (1) with at least one temperature sensor (9) is arranged between each pair of hot press plates.

12. Hot plate press according to claim 11, **characterised in that** each pair of hot press plates is assigned at least an own evaluation device with a connection to an own temperature indicator, an own alarm device and/or an own temperature control device for controlling the temperature of the hot press plates and/or an own temperature regulation device for regulating the temperature of the hot press plates.

## Revendications

1. Coussinet de presse (1) pour l'utilisation dans des presses à plateaux chauffants qui sont destinées à la fabrication de panneaux sous forme de matière à presser, le coussinet de presse (1) présentant un support textile (2) avec un assemblage ou une multitude de fils (3, 4) dans au moins une direction, **caractérisé par le fait que** le coussinet de presse (1) présente au moins un capteur de température (9) qui peut être connecté par une interface à un appareil d'évaluation externe.

2. Coussinet de presse selon la revendication 1, **caractérisé par le fait qu'**un capteur de température (9) est disposé au milieu de la surface du coussinet de presse (1).

3. Coussinet de presse selon la revendication 1, **caractérisé par le fait que** plusieurs capteurs de température (9) sont répartis sur la surface du coussinet de presse.

4. Coussinet de presse selon la revendication 1 ou 3, **caractérisé par le fait que** les ou plusieurs des capteurs de température sont disposés dans un plan du coussinet de presse.

5. Coussinet de presse selon l'une des revendications 1 à 4, **caractérisé par le fait que** le ou les capteur(s) de température (9) est/sont disposé(s) près de ou sur un côté plat du coussinet de presse (1).

6. Coussinet de presse selon l'une des revendications 1 à 5, **caractérisé par le fait que** le ou les capteur(s) de température est/sont réalisé(s) sous forme de thermocouple (9), de capteur de résistance, de thermistance CTP ou CTN.

7. Coussinet de presse selon l'une des revendications 1 à 6, **caractérisé par le fait qu'**au moins un des fils (3) est entièrement ou partiellement remplacé par des lignes d'amenée à au moins un capteur de température (9).

8. Coussinet de presse selon l'une des revendications 1 à 7, **caractérisé par le fait que** le capteur de température (9) ou au moins un des capteurs de température se compose de fils individuels (7, 8) qui sont dénudés au point de mesure et y établissent un contact, p. ex. y sont torsadés.

9. Coussinet de presse selon l'une des revendications 1 à 8, **caractérisé par le fait que** le ou les capteur(s) de température dispose(nt) de lignes d'amenée (7, 8) qui sont menées vers l'extérieur et y présentent un connecteur.

10. Presse à plateaux chauffants pour la fabrication de panneaux sous forme de matière à presser avec des plateaux de presse chauffants et des coussinets de presse (1) disposés entre ceux-ci, les coussinets de presse (1) présentant un support textile (2) avec un assemblage ou une multitude de fils (3, 4) dans au moins une direction, **caractérisé par le fait qu'**au moins un coussinet de presse (1) présente au moins un capteur de température (9) qui peut être connecté par une interface à un appareil d'évaluation externe, lequel génère des signaux pour un affichage de température, un dispositif émetteur d'alarme et/ou un dispositif de commande de température pour la commande de température des plateaux de presse chauffants et/ou un dispositif de régulation de température pour la régulation de température des plateaux de presse chauffants.

11. Presse à plateaux chauffants selon la revendication 10, **caractérisé par le fait qu'**au moins un coussinet de presse (1) avec au moins un capteur de température (9) est disposé entre chaque paire de plateaux de presse chauffants.

12. Presse à plateaux chauffants selon la revendication 11, **caractérisé par le fait qu'**à chaque paire de plateaux de presse chauffants est associé au moins un appareil d'évaluation propre connecté chaque fois à un affichage de température propre, un dispositif émetteur d'alarme propre et/ou un dispositif de commande de température propre pour la commande de température des plateaux de presse chauffants et/ou un dispositif de régulation de température propre pour la régulation de température des plateaux de presse chauffants.
